# EUROPÄISCHE PATENTSCHRIFT

(11) **EP 2 616 308 B1**
(45) Veröffentlichungstag und Bekanntmachung des Hinweises auf die Patenterteilung: **24.08.2016**
(21) Anmeldenummer: 11754672.1
(22) Anmeldetag: 09.09.2011
(51) Int. Cl.: B62B 7/00, B62B 7/06, B62B 7/08, B62B 9/08

(54) **ZUSAMMENKLAPPBARER KINDERWAGEN**
FOLDABLE STROLLER
POUSSETTE PLIANTE

(30) Priorität: 13.09.2010 DE 102010037506
(43) Veröffentlichungstag der Anmeldung: 24.07.2013
(73) Patentinhaber: Greentom IP and Licensing BV, 6229 PB Maastricht (NL)
(72) Erfinder: BOST, Bart, NL-6229 PB Maastricht (NL)
(74) Vertreter: Fritz, Edmund Lothar
(86) Internationale Anmeldenummer: PCT/EP2011/065638
(87) Internationale Veröffentlichungsnummer: WO 2012/034940

(56) Entgegenhaltungen:
- EP-A1- 1 503 095
- EP-A1- 1 538 062
- US-A1- 2008 088 116
- US-A1- 2008 093 824
- US-A1- 2010 109 293

## Beschreibung

Die vorliegende Erfindung betrifft einen zusammenklappbaren Kinderwagen gemäß dem Oberbegriff von Anspruch 1.

Unter einem Buggy wird in der vorliegenden Erfindung eine Schiebekarre für Kleinkinder verstanden, in der das Kleinkind im aufgeklappten Zustand eine sitzende Position einnimmt, im Gegensatz zum klassischen Kinderwagen, welcher Babys oder Kleinkinder in einem meist abnehmbaren tragbaren Behältnis in liegender Position aufnimmt.

Ein Buggy oder Kinderwagen ist beispielsweise aus der DE 20 2008 017 305 U1 bekannt. Bei diesem bekannten Buggy ist wie bei vielen marktgängigen Typen ein horizontaler Basisaufbau als Untergestell vorhanden, an dem sich die Hinterräder befinden und der sich zwischen Hinterrädern und Vorderrädern erstreckt. Die Vorderräder sind an einer in Querrichtung verlaufenden Strebe angebracht. Zwischen dem geneigten Schieberahmen und dem horizontalen Basisaufbau verlaufen in etwa vertikaler Richtung Stützelemente, die an ihren Enden sowohl mit dem Schieberahmen als auch mit dem Untergestell jeweils gelenkig verbunden sind. Die Sitzeinheit ist wie an sich bei Buggys bekannt an dem Gestell des Buggys abnehmbar angebracht. Beim Zusammenklappen erfolgt hier allerdings die Schwenkbewegung um die Gelenke so, dass der obere Abschnitt des Schieberahmens in Richtung auf den unteren Abschnitt des Schieberahmens geklappt wird. Bei Buggys ist es jedoch auch möglich, diese Schwenkbewegung im umgekehrten Drehsinn durchzuführen, so dass der obere Abschnitt des Schieberahmens beim Zusammenklappen nach hinten geschwenkt wird. Bei dem bekannten Buggy ist für das Lösen der Arretierung der Gelenke eine Schubbewegung des oberen Abschnitts des Schieberahmens nach unten hin vorgesehen. Es sind jedoch auch andere Mechanismen zum Lösen der Gelenke möglich, beispielsweise an den Gelenken selbst, worauf es im Rahmen der vorliegenden Erfindung nicht ankommt.

Ein weiterer Buggy ist aus der DE 10 2007 047 702 A1 bekannt. Bei diesem bekannten Buggy besteht das Untergestell aus vorderen Rohren, die etwa in Richtung der Vorderräder weisen und hinteren Rohren, die sich etwa in Richtung der Hinterräder erstrecken, wobei im aufgeklapptem Zustand in der Seitenansicht gesehen hintere Rohre und vordere Rohre eine nahezu rechtwinklige Dreiecksformation mit obenliegendem Scheitelpunkt bilden und wobei dann der Schieberahmen etwa mit den vorderen Rohren fluchtet. Unten verläuft zwischen den vorderen Rohren und den hinteren Rohren etwa horizontal eine Anordnung von gelenkig miteinander verbundenen Streben, die beim Zusammenklappen nach oben gezogen wird und mittig einklappt. Im kompakten zusammengeklappten Zustand liegen die Hinterräder, die hier um eine geneigte Achse nach innen schwenken, zwischen den Vorderrädern. Um das Gestell beim Zusammenklappen in der Länge zu verkürzen, ist hier zudem vorgesehen, dass der Schieberahmen durch eine Halterung in Richtung auf die Vorderräder hindurch geschoben wird. Es sind somit für das Zusammenklappen zwei Bewegungsabläufe notwendig, nämlich zum einen ein Schwenken, um das Untergestell zusammen zu klappen und zusätzlich das Verschieben des Schieberahmens.

Den bislang bekannten Buggys der zuvor geschilderten Art ist gemeinsam, dass die wesentlichen Teile des Schieberahmens und des Untergestells aus vergleichsweise vielen Einzelteilen bestehen, die bei der Herstellung eine recht zeitaufwändige Montage erfordern. Mindestens teilweise handelt es sich dabei um Metallteile, wie beispielsweise Streben, Radachsen, Teile des Rahmens und dergleichen. Für die Verbindung der einzelnen Bauelemente werden herkömmliche Befestigungselemente wie Schrauben, Nieten und dergleichen verwendet.

Ein Buggy (englischer Begriff "stroller") mit den Merkmalen gemäß dem Oberbegriff von Anspruch 1 ist in der US 2010/0109293 A1 beschrieben. Die Vorgehensweise beim Zusammenklappen dieses Buggys aus der fahrbereiten Gebrauchsstellung in die kompakte Transportstellung ist wie folgt. Man löst die Verbindung im Gelenkbereich zwischen dem oberen Abschnitt des Schieberahmens und dem unteren Abschnitt des Schieberhamens und schwenkt dann den oberen Abschnitt des Schieberahmens um nahezu 180 ° nach hinten auf den unteren Abschnitt zu. Die Vorderräder, die sich an einer Querverbindung des unteren Abschnitts des Schieberahmens befinden, stehen vergleichsweise eng und die Hinterräder, die sich an einem Hinterrahmen des Untergestells befinden, stehen weiter auseinander als die Vorderräder, so dass im zusammengeklappten Zustand die beiden Vorderräder zwischen den Hinterrädern liegen. Bei diesem Buggy weist der Hinterrahmen auch eine Querstrebe auf, die jedoch vergleichsweise unten angeordnet ist, wobei sich die von den Hinterrädern ausgehenden Streben über diese Querstrebe hinaus nach oben hin bis zu einem Gelenk fortsetzen, an dem diese Streben gelenkig mit dem unteren Abschnitt des Schieberahmens verbunden sind. Im Bereich dieser Gelenke gibt es keine Querverbindung. Dieser bekannte Buggy ist in erster Linie dazu ausgebildet, in dem Schieberahmen einen weiteren Sitzrahmen aufzunehmen, der verstellbar ist, so dass es möglich ist, ein Kind in einer sitzenden oder auch in einer aufrecht stehenden Position zu halten. Aus diesem Grund ist die gesamte Rahmenkonstruktion sehr komplex und umfasst eine Vielzahl von Bauteilen.

Aus der DE 20 2005 013 397 U1 ist ein weiterer Buggy bekannt, der beim Zusammenklappen in die kompakte Transportstellung eine ähnliche Kinematik zeigt wie der vorgenannte Buggy. Bei diesem Buggy ist jedoch nur ein einziges Vorderrad vorhanden. Dort wo der Hinterrahmen gelenkig mit dem unteren Abschnitt des Schieberahmens verbunden ist, gibt es eine Querstrebe, die jedoch flach ist, zur Aussteifung des unteren Abschnitts des Schieberahmens dient und keine Funktion für das Gelenk hat. An dem Hinterrahmen mit den Hinterrädern gibt es eine weitere Querstrebe, die die beiden geneigt zu den Hinterrädern verlaufenden Streben miteinander verbindet. Diese Querstrebe verläuft jedoch mit Abstand unterhalb der vorgenannten Strebe des Schieberahmens und hat ebenfalls keine Funktion für das Gelenk. In diesem Dokument geht es um einen Mechanismus zum Entsperren einer Verriegelung zwecks Lösen der Gelenke, die danach ein Zusammenklappen des Buggys in die Transportstellung ermöglichen. Dieser Mechanismus ist vergleichsweise komplex aufgebaut und daher störungsanfällig. Zudem besteht aufgrund des Mechanismus der Bereich um die Gelenke bei diesem Buggy aus vielen teils kleineren Einzelteilen, die eine rationelle Fertigung nicht zulassen. Im Übrigen ist es auch vorgesehen, viele metallische Bauteile bei der Fertigung dieses Buggys zu verwenden.

Ausgehend von der vorgenannten Problematik besteht die Aufgabe der vorliegenden Erfindung darin, den Aufbau eines zusammenklappbaren Kinderwagens oder Buggys der eingangs genannten Gattung im Hinblick auf eine kostengünstigere Herstellung und Verkürzung der Montagezeit unter Beibehaltung der Funktionalität zu verbessern.

Die Lösung dieser Aufgabe liefert ein zusammenklappbarer Kinderwagen der eingangs genannten Gattung mit den kennzeichnenden Merkmalen des Hauptanspruchs. Erfindungsgemäß ist vorgesehen, dass sich eine in Querrichtung verlaufende Gelenkhülse an dem unteren Abschnitt des Schieberahmens befindet und eine obere horizontale Querstrebe des Hinterrahmens in dieser Gelenkhülse um eine horizontale Achse schwenkbar aufgenommen ist.

Bevorzugt wird der erfindungsgemäße Buggy in seinen tragenden Teilen hauptsächlich aus nur drei Bauteilen aufgebaut. Das erste Bauteil bildet den oberen Abschnitt des Schieberahmens, das zweite Bauteil bildet den unteren Abschnitt des Schieberahmens und wird mit dem ersten Bauteil über Gelenke verbunden, so dass der obere Abschnitt des Schieberahmens gegenüber dem unteren Abschnitt des Schieberahmens schwenkbar ist. An diesem unteren Abschnitt des Schieberahmens können sich die Vorderräder befinden. Das dritte Bauteil ist der so genannte Hinterrahmen, an dem sich die Hinterräder befinden können, wobei dieser Hinterrahmen wiederum beim Zusammenklappen des Buggys gegenüber dem unteren Abschnitt des Schieberahmens um eine horizontale Achse schwenkt. Anders als im Stand der Technik gemäß DE 20 1008 017 305 U1 wird erfindungsgemäß bevorzugt der obere Abschnitt des Schieberahmens nicht auf den unteren Abschnitt geklappt, sondern von diesem weg im entgegengesetzten Drehsinn nach hinten geschwenkt. Weiterhin ist bei der erfindungsgemäßen Lösung kein horizontaler ebener Basisaufbau mehr vorhanden, der sich von den Hinterrädern zu den Vorderrädern erstreckt, sondern beim Zusammenklappen bewegen sich Vorderräder und Hinterräder aufeinander zu. Es gibt hingegen keine horizontale Verbindung mehr zwischen Vorderrädern und Hinterrädern. Der erfindungsgemäße Buggy lässt sich daher sehr flach zusammenlegen.

Gegenüber der aus dem Stand der Technik gemäß DE 10 2007 047 702 A1 bekannten Lösung unterscheidet sich die erfindungsgemäße Lösung darin, dass beim Zusammenklappen der obere Abschnitt der Schieberahmens nicht einwärts verschoben, sondern gegenüber dem unteren Abschnitt des Schieberahmens um eine gemeinsame Gelenkachse verschwenkt wird. Die Schwenkbewegung des Hinterrahmens, der erfindungsgemäß die Hinterräder trägt, ist ebenfalls anders als im Stand der Technik, wo die Streben, an denen sich die Hinterräder befinden, jeweils einzeln um geneigte Achsen schwenken. Erfindungsgemäß ist dagegen nur eine horizontale Achse vorhanden und beim Zusammenklappen schwenkt der Hinterrahmen gegenüber dem unteren Abschnitt des Schieberahmens in einem Stück um diese Achse, und zwar gleichzeitig und bevorzugt auch gleichsinnig im Drehsinn mit der Schwenkbewegung des oberen Abschnitts des Schieberahmens.

Dies hat den erheblichen Vorteil, dass man in nur einer Bewegung den Buggy in den kompakten Zustand zusammenklappen kann, wobei sich der obere Abschnitt des Schieberahmens und der Hinterrahmen auf den unteren Abschnitt des Schieberahmens (an dem sich in der Regel die Vorderräder befinden) zu bewegen und sich diese drei Hauptteile des Rahmens des Buggys flach legen lassen bis in eine annähernd parallele Position dieser Rahmenteile. Weiterhin entfallen bei der erfindungsgemäßen Lösung gegenüber dem genannten Stand der Technik eine Reihe von Bauteilen, denn dort sind das Gestänge, an dem sich die Hinterräder befinden und dasjenige, an dem sich die Vorderräder befinden über eine Anordnung mit allein fünf Verstrebungen untereinander verbunden.

Eine besonders bevorzugte Weiterbildung der Erfindung sieht vor, dass an beiden Seiten des Untergestells jeweils Stützstreben vorgesehen sind, die an ihrem unteren Ende jeweils gelenkig an dem Hinterrahmen des Untergestells und an ihrem oberen Ende jeweils gelenkig an dem oberen Abschnitt des Schieberahmens angebracht sind. Diese Stützstreben stützen im aufgeklappten Zustand des Buggys bei (zum Beispiel durch Einrasten) arretierten Gelenken den oberen Abschnitt des Schieberahmens an beiden Seiten jeweils gegenüber dem Hinterrahmen ab und können beispielsweise im aufgeklappten Zustand eine etwa senkrechte Position einnehmen. Um die Anzahl der Bauteile zu reduzieren und bei dem Konzept einer Fertigung des Buggys möglichst ausschließlich aus gespritzten Bauteilen aus Kunststoff zu bleiben, können die Gelenkaugen für die gelenkige Anbringung der Stützstreben am oberen Abschnitt des Schieberahmens einerseits und/oder am Hinterrahmen andererseits jeweils angespritzt sein, so dass mit den Stützstreben nur zwei weitere Bauteile anfallen, jedoch keine weiteren Befestigungselemente für die Gelenke notwendig werden.

Gemäß einer bevorzugten Weiterbildung der vorliegenden Erfindung weist der Hinterrahmen des Untergestells an jeder Seite je ein Stützbein auf, an welchem jeweils im unteren Endbereich eine Achse für je ein Hinterrad angeformt ist.

Dabei ist weiterhin bevorzugt der Hinterrahmen des Untergestells ein einstückig aus Kunststoff gespritztes Bauteil, umfassend zwei Stützbeine, die horizontale Querstrebe, die die beiden Stützbeine oben miteinander verbindet, eine an jedem Stützbein jeweils im unteren Endbereich angeformte Achse für je ein Hinterrad sowie gegebenenfalls eine weitere untere die beiden Stützbeine verbindende Querstrebe. Durch das Anformen der beiden Achsen für die Hinterräder am Hinterrahmen wird das zuvor genannte Konzept der Reduzierung der notwendigen Bauteile und die möglichst vollständige Fertigung aus gespritzten Bauteilen aus Kunststoff konsequent verfolgt. Anders als bei aus dem Stand der Technik bekannten Buggys werden für die Achsen für die Hinterräder weder separate Bauteile noch metallische Bauteile benötigt. Die Achsen können vielmehr beim Spritzgießen des Hinterrahmens gleich mit angespritzt werden. Dies ermöglicht später ein vollständiges Recycling des Buggys ohne Materialtrennung. Der Buggy ist praktisch vollständig werkstoffhomogen. Weiterhin wird dadurch aber auch die Montage des Buggys bei der Fertigung erheblich vereinfacht, da sich die Hinterräder sehr rasch an den angespritzten Achsen anbringen lassen.

Gegenstand der vorliegenden Erfindung ist weiterhin eine besonders vorteilhafte Bremse für einen Buggy, insbesondere einen Buggy mit den Merkmalen der vorgenannten Art, welche Gegenstand des Anspruchs 4 ist. Danach ist vorgesehen, dass die Bremse für die Hinterräder einen entlang einer unteren Querstrebe des Hinterrahmens in einer Führung beweglichen Schieber umfasst, der endseitig mit Bremselementen versehen ist, wobei bei Verschieben des Schiebers in seiner Führung in einer Richtung die Bremselemente mit korrespondierenden Eingriffselementen gleichzeitig an beiden Hinterrädern in Eingriff gelangen. Hier ist vorteilhaft, dass man einen einfach aufgebauten Bremsmechanismus für die Hinterräder hat, den man gegebenenfalls sogar aus nur einem Bauteil herstellen kann, welches ebenfalls aus Kunststoff durch Spritzgießen herstellbar ist, denn die Bremselemente für beide Hinterräder können sich an dem Schieber befinden. Die Führung für diesen Schieber befindet sich am Hinterrahmen, beispielsweise an der genannten Querstrebe, die zum Beispiel bogenförmig ausgebildet sein kann. Auch am Hinterrahmen werden daher keine weiteren Bauteile für den Bremsmechanismus benötigt. Auch hier wird die Montage wiederum erheblich vereinfacht, da für den Bremsmechanismus nur ein Bauteil montiert werden muss.

Beispielsweise kann der genannte Schieber für den Bremsmechanismus als Bremselemente Zahnkrallen aufweisen, die mit korrespondierenden Zahnkränzen an den Hinterrädern in Eingriff gelangen, wobei bei einem Hinterrad der Eingriff mit einem Innenzahnkranz und bei dem anderen Hinterrad der Eingriff mit einem Außenzahnkranz erfolgt. Diese bevorzugte konstruktive Ausgestaltung ermöglicht es, durch Bewegung des Schiebers in einer Richtung beide Hinterräder gleichzeitig zu bremsen. Der Schieber mit den Bremselementen kann beispielsweise ein einstückig aus Kunststoff gespritztes bogenförmiges Bauteil sein, für welches ein Kurvenschlitz in der Querstrebe des Hinterrahmens als Führung dient. Durch hin und her Schieben gelangt dann der Schieber beispielsweise jeweils aus der Bremsposition in die gelöste Position.

Um dem zuvor genannten Konzept der Reduzierung der notwendigen Bauteile und der möglichst vollständigen Fertigung aus gespritzten Bauteilen aus Kunststoff konsequent zu folgen, ist weiterhin bevorzugt vorgesehen, dass die für die Gelenke zur gelenkigen Verbindung des oberen Abschnitts mit dem unteren Abschnitt des Schieberahmens notwendigen Elemente jeweils an den beiden genannten Abschnitte angespritzt sind, so dass keine separaten Gelenkbauteile benötigt werden. Beispielsweise kann der untere Abschnitt des Schieberahmens ein einstückig aus Kunststoff gespritztes Bauteil in Form einer nach oben hin offenen U-Strebe sein, umfassend jeweils Gelenkhälften der Gelenke für die gelenkige Verbindung mit dem oberen Abschnitt des Schieberahmens jeweils im oberen Endbereich der beiden Schenkel der U-Strebe Der obere Abschnitt des Schieberahmens kann ebenfalls beispielsweise ein einstückig aus Kunststoff gespritztes Bauteil in Form einer nach unten hin offenen U-Strebe sein, umfassend jeweils korrespondierende Gelenkhälften der Gelenke für die gelenkige Verbindung mit dem unteren Abschnitt des Schieberahmens. Alle für die gelenkige Verbindung zwischen oberem und unterem Abschnitt des Schieberahmens notwendigen Gelenkelemente bestehen somit aus Kunststoff und befinden sich einstückig und angespritzt an diesen beiden Abschnitten des Schieberahmens.

Bei herkömmlichen Buggys ist es meist so, dass für die Anbringung eines textilen Sitzes am Rahmen des Buggys separate Befestigungselemente wie Druckknöpfe aus dergleichen verwendet werden, die meist aus Metall bestehen und bei der Erstmontage des Buggys herstellerseitig angebracht werden müssen. Bei der erfindungsgemäßen Lösung werden hingegen bevorzugt an Schenkeln der U-Strebe des oberen Abschnitts des Schieberahmens jeweils innenseitig Elemente für eine Befestigung eines textilen Sitzes angespritzt, so dass auch durch diese Maßnahme ein einfacheres Recycling des gesamten Buggys möglich wird und die Montagezeit weiter verkürzt wird.

Gegenstand der vorliegenden Erfindung ist weiterhin eine besonders vorteilhafte konstruktive Ausführungsvariante eines Buggys, insbesondere eines Buggy mit den Merkmalen der vorgenannten Art, welche Gegenstand der Ansprüche 11 und 12 ist. Danach ist vorgesehen, dass der Buggy in seinen sämtlichen tragenden Bauteilen des Schieberahmens und des Untergestells sowie allen wesentlichen funktionellen Bauteilen ausschließlich aus gespritzten Bauteilen aus werkstoffhomogenen Kunststoffen besteht. Diese Ausführungsvariante hat den besonderen Vorteil, dass sich ein solcher Buggy problemlos recyceln lässt. Es ist keine Trennung nach Bauteilen unterschiedlicher Werkstoffe erforderlich und gegebenenfalls noch nicht einmal eine Demontage, das sich dann der Buggy insgesamt einfach zerkleinern und einschmelzen lässt.

Weiterhin bestehen bevorzugt Schieberahmen und Untergestell mit allen wesentlichen funktionellen Bauteilen aus insgesamt nur fünf miteinander verbindbaren gespritzten Bauteilen aus Kunststoff,
nämlich einem Bauteil, welches den oberen Abschnitt des Schieberahmens umfasst, einem Bauteil, welches den unteren Abschnitt des Schieberahmens umfasst, einem Bauteil, welches den Hinterrahmen umfasst,
sowie zwei Stützstreben, die an ihrem unteren Ende jeweils gelenkig an dem Hinterrahmen des Untergestells und an ihrem oberen Ende jeweils gelenkig an dem oberen Abschnitt des Schieberahmens angebracht sind. Dies ermöglicht eine sehr kostengünstige Herstellung des Buggys durch Spritzen nur weniger Bauteil aus Kunststoff, die anschließend in nur wenigen Arbeitsgängen in nur sehr kurzer Zeit montiert werden können. Während man für die Montage eines herkömmlichen Buggys aufgrund der Vielzahl von Einzelteilen, aus denen dieser besteht und die miteinander zu verbinden sind, meist über Schraub- und Nietverbindungen, eine Montagezeit von Hand von einer Stunde oder mehr benötigt, lässt sich ein erfindungsgemäßer Buggy in nur wenigen Minuten montieren. Es liegt auf der Hand, dass dies zu einer ganz erheblichen Senkung der Lohnkosten bei der Montage und somit zu einer erheblichen Senkung der Herstellkosten führt.

Eine weitere vorteilhafte bevorzugte Ausführungsvariante eines erfindungsgemäßen Buggys sieht vor, dass die obere horizontale Querstrebe des Hinterrahmens Schlüsselflächen aufweist, denen entsprechend dimensionierte Montageaufnahmen in der Gelenkhülse an dem unteren Abschnitt des Schieberahmens zugeordnet sind, so dass nach der Montage des Buggys die Querstrebe aus der Gelenkhülse, die diese Querstrebe um eine horizontale Achse schwenkbar aufnimmt, nicht mehr herausnehmbar ist. Die Verbindung zwischen dem Hinterrahmen und dem unteren Abschnitt des Schieberahmens ist damit so ausgestaltet, dass sie sich nur bei der herstellerseitigen Erstmontage herstellen lässt, später aber vom Benutzer nicht wieder gelöst werden kann. Damit ist die Verbindung dieser tragenden Bauteile des Rahmens dauerhaft stabil und ein unbeabsichtigtes Lösen wird vermieden.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine perspektivische Gesamtansicht eines erfindungsgemäßen Buggys gemäß einer beispielhaften Ausführungsvariante;
Figur 2 eine weitere perspektivische Ansicht des Buggys im teilweise zusammen geklappten Zustand;
Figur 3 eine weitere perspektivische Ansicht des Buggys im vollständig zusammengeklappten Zustand;
Figur 4 eine vergrößerte Detailansicht des oberen Abschnitts des Schieberahmens des Buggys;
Figur 5 eine vergrößerte Detailansicht des unteren Abschnitts des Schieberahmens des Buggys;
Figur 6 eine Ansicht des Hinterrahmens des Buggys von der Rückseite her gesehen;
Figur 7 eine vergrößerte Detailansicht im Bereich der Gelenkhülse des unteren Abschnitts des Schieberahmens, die die obere Querstrebe des Hinterrahmens aufnimmt, in einem etwas anderen Winkel (von der Unterseite her) gesehen als in Figur 6;

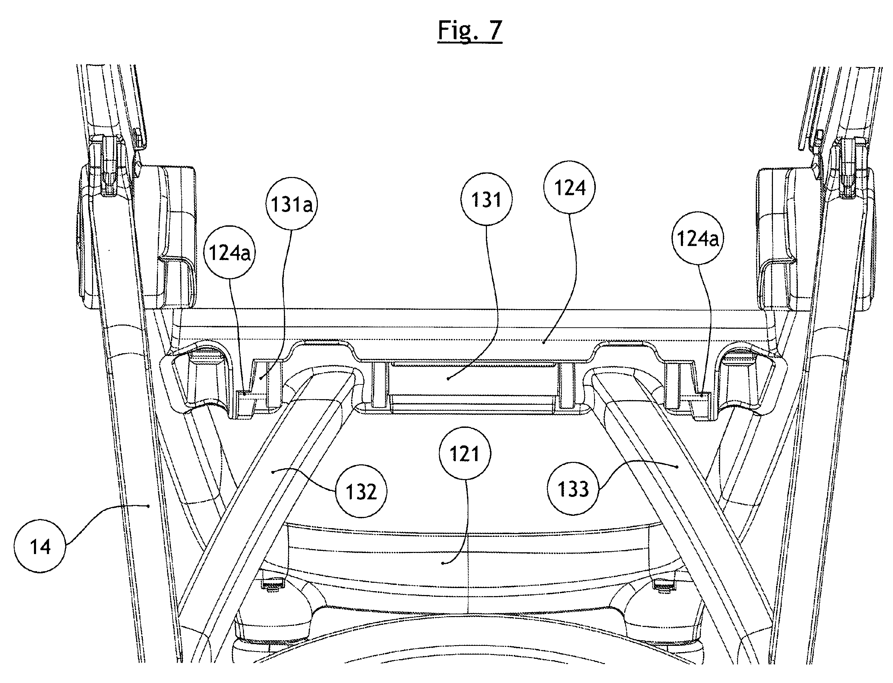

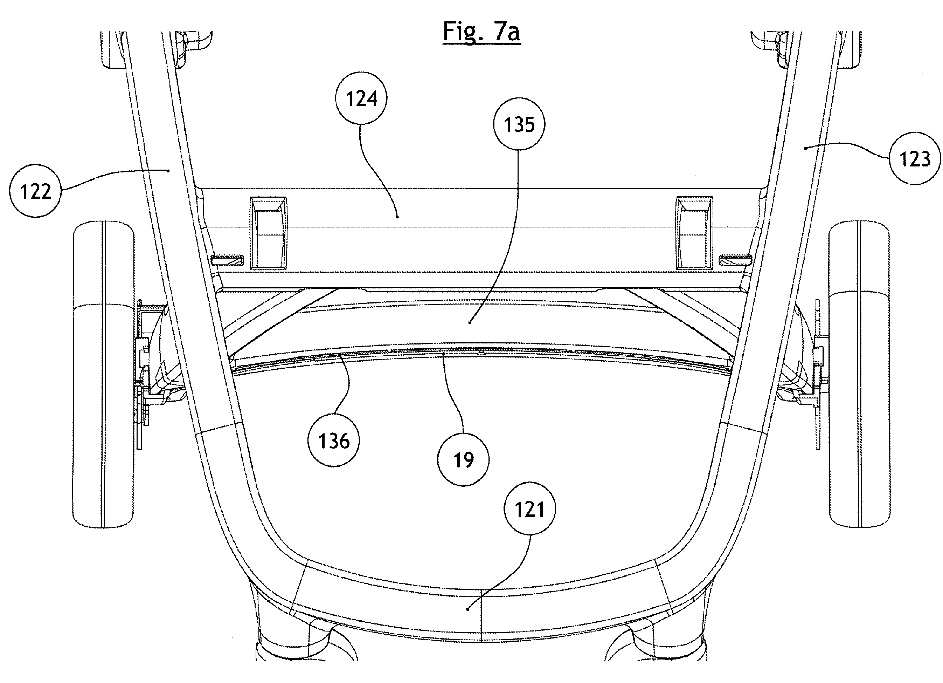

Figur 7 a eine vergrößerte Detailansicht des unteren Abschnitts des Schieberahmens von der Vorderseite her gesehen;

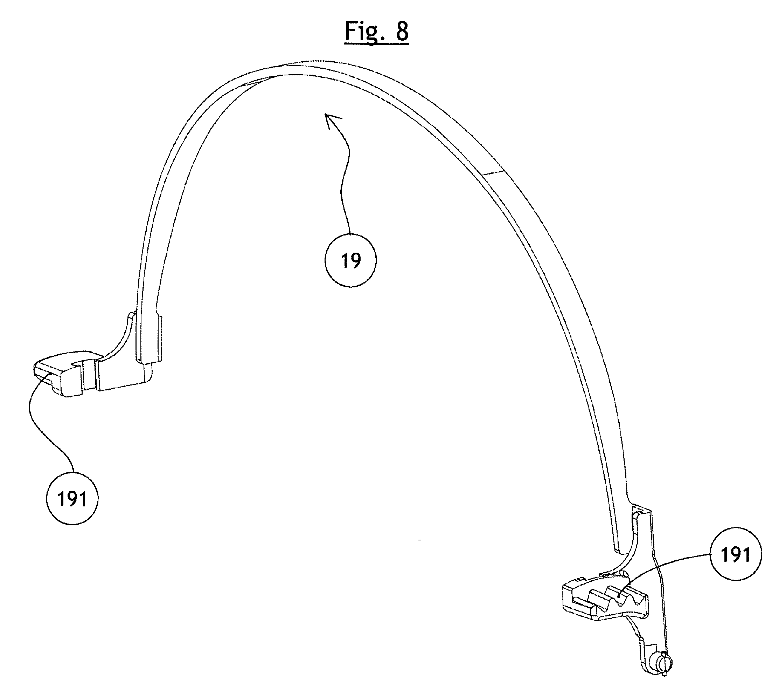

Figur 8 eine Einzelteilansicht des Schiebers für den Bremsmechanismus;

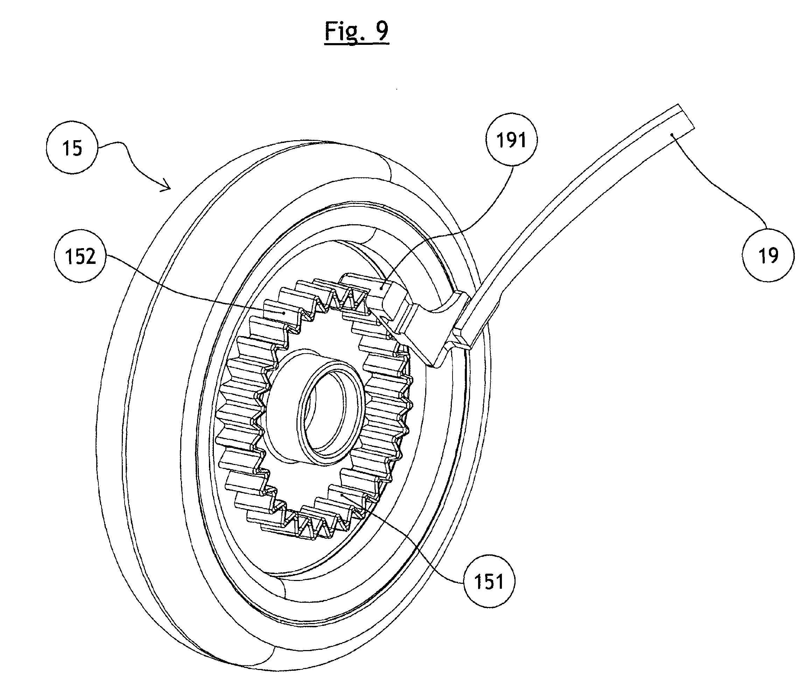

Figur 9 eine Detailansicht, die zeigt, wie die Bremselemente des Schiebers in den Zahnkranz eines Hinterrads eingreifen;

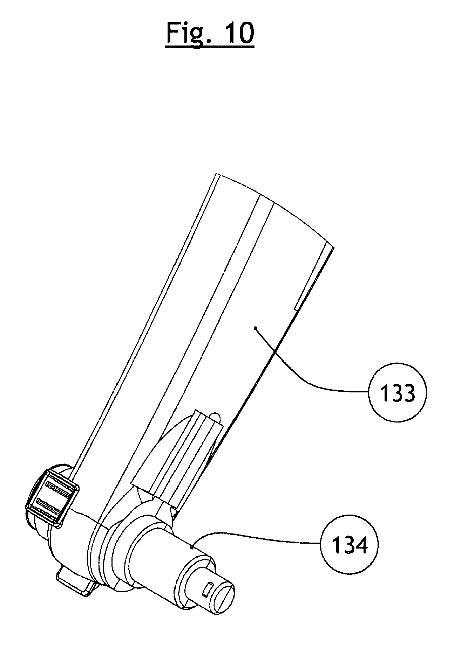

Figur 10 eine Detailansicht der an dem Hinterrahmen angespritzten Achse für ein Hinterrad;

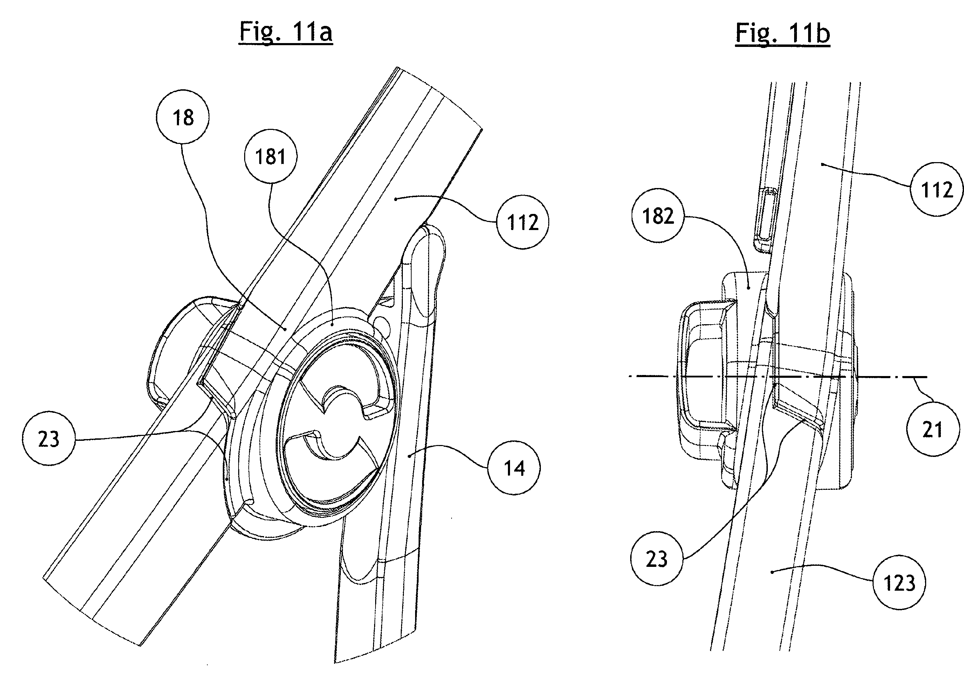

Figur 11 a eine Detailansicht eines Gelenks im Verbindungsbereich zwischen dem oberen Abschnitt und dem unteren Abschnitt des Schieberahmens;
Figur 11 b eine weitere Detailansicht des Gelenks in einem anderen Winkel gesehen als in Figur 11 a;

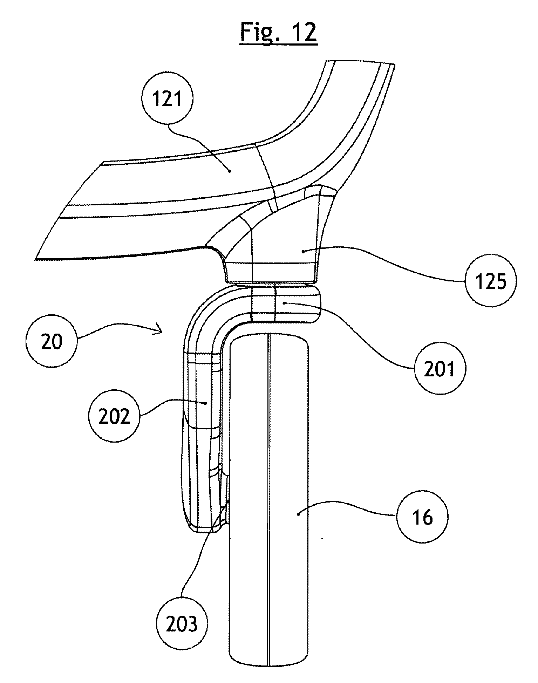

Figur 12 eine Detailansicht im Bereich der Aufhängung eines der Vorderräder.

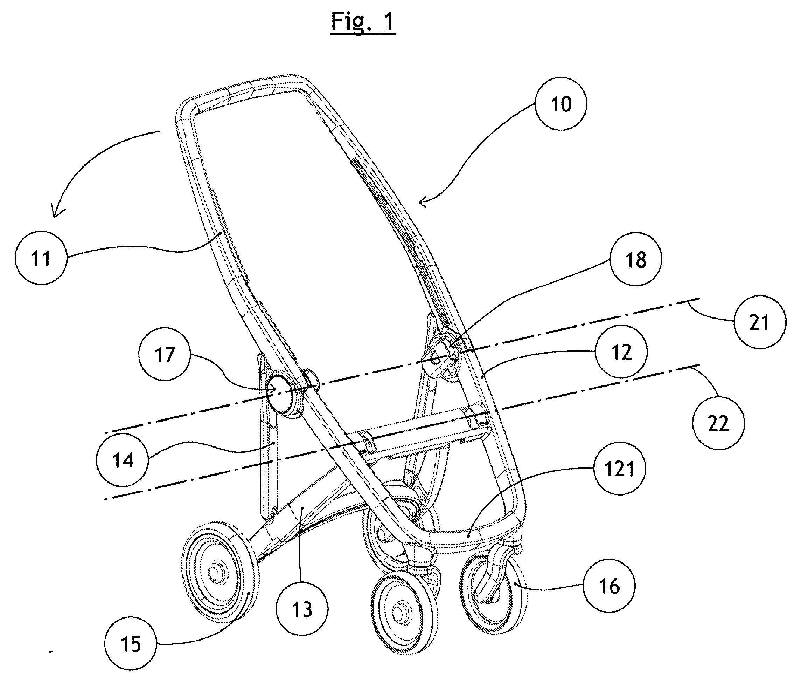

Zunächst wird auf die Figur 1 Bezug genommen, die eine perspektivische Gesamtansicht eines erfindungsgemäßen Buggys 10 im aufgeklappten Gebrauchszustand zeigt, wobei jedoch nur der Rahmen dargestellt ist und nicht die textile Bespannung, die den Sitz des Buggys bildet und an Teilen des Rahmens befestigt wird, wie später noch näher erläutert wird. Die gesamte Rahmenkonstruktion besteht im Wesentlichen aus nur drei Hauptbauteilen, nämlich dem oberen Abschnitt 11 des Schieberahmens, dem unteren Abschnitt 12 des Schieberahmens und dem Hinterrahmen 13. Hinzu kommen noch zwei parallele Stützstreben 14, die im dargestellten aufgeklappten Zustand gemäß Figur 1 in etwa vertikal verlaufen.

Der obere Abschnitt 11 des Schieberahmens ist in seiner Grundrissform im Wesentlichen U-förmig, wobei die U-Form nach unten hin offen ist. Der untere Abschnitt 12 des Schieberahmens ist in seiner Grundrissform auch im Wesentlichen U-förmig, wobei jedoch hier die U-Form nach oben hin, d.h. zum oberen Abschnitt 11 des Schieberahmens hin, offen ist. An dem unteren quer verlaufenden U-Steg 121 des unteren Abschnitts 12 des Schieberahmens sind die beiden Vorderräder 16 des Buggys 10 angebracht. Die beiden Hinterräder 15 des Buggys 10 befinden sich an dem Hinterrahmen 13. Der untere Abschnitt des Hinterrahmens 13 mit den Hinterrädern 15 bildet zusammen mit dem unteren Bereich des unteren Abschnitts 12 des Schieberahmens quasi das Untergestell des Buggys, das heißt es ist für das Untergestell kein separates Bauteil mehr notwendig, sondern die gesamte tragende Konstruktion mit dem Schieberahmen und dem Untergestell ergibt sich aus den drei genannten Hauptbauteilen, nämlich oberer Abschnitt 11 des Schieberahmens, unterer Abschnitt 12 des Schieberahmens und Hinterrahmen 13. Diese drei Hauptbauteile sind bevorzugt jeweils einstückig aus Kunststoff hergestellt, insbesondere im Spritzgußverfahren, wobei sich nahezu alle weiteren Applikationen und funktionellen Bauteile bereits nach der Herstellung an den drei Hauptbauteilen befinden, das heißt mit angespritzt werden, so dass viele nachfolgende Montagevorgänge vereinfacht werden oder entfallen können.

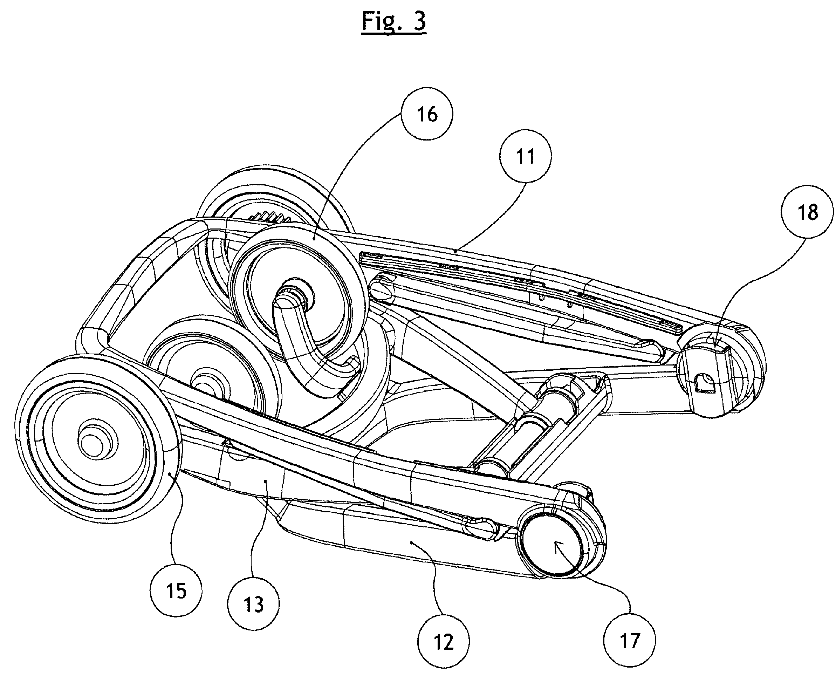

Der etwa U-förmige obere Abschnitt 11 des Schieberahmens und der etwa U-förmige untere Abschnitt 12 des Schieberahmens sind in den einander zugewandten Endbereichen ihrer beiden U-Schenkel 111, 112 bzw. 122, 123 jeweils über Gelenke 17, 18 gelenkig miteinander verbunden und zwar derart, dass man nach entarretieren der Gelenke 17, 18 den oberen Abschnitt 11 nach hinten kippen und um nahezu 180 ° Schwenken oder Klappen kann, bis der Buggy einen flachen zusammengeklappten Transportzustand einnimmt, welcher in Figur 3 dargestellt ist. An dem oberen Abschnitt 11 des Schieberahmens befinden sich dabei an beiden Seiten jeweils äußere Gelenkhälften 171, 181, die bevorzugt auch bei der Herstellung angespritzt sind, während sich an dem unteren Abschnitt 12 des Schieberahmens jeweils innere Gelenkhälften 172, 182 befinden, die auch angespritzt sein können, wobei die jeweiligen Gelenkhälften zusammenwirken und teilweise ineinandergreifen, so dass der obere Abschnitt 11 und der untere Abschnitt 12 bei gelösten Gelenken gegeneinander verschwenkt werden können. Die beiden Stützstreben 14 sind wie man erkennt einerseits in Nähe etwas oberhalb der Gelenke 17, 18 an ihrem jeweils oberen Ende gelenkig mit je einem Schenkel des oberen Abschnitts 11 des Schieberahmens verbunden, während die beiden Stützstreben 14 an ihrem unteren Ende jeweils gelenkig mit dem Hinterrahmen 13 verbunden sind und zwar jeweils mit einem Abschnitt des Hinterrahmens 13, der je ein Stützbein 132, 133 bildet. Die Stützstreben 14 sind ein Stück oberhalb der Achsen 134 der Hinterräder 15 an dem Hinterrahmen 13 gelenkig angebracht.

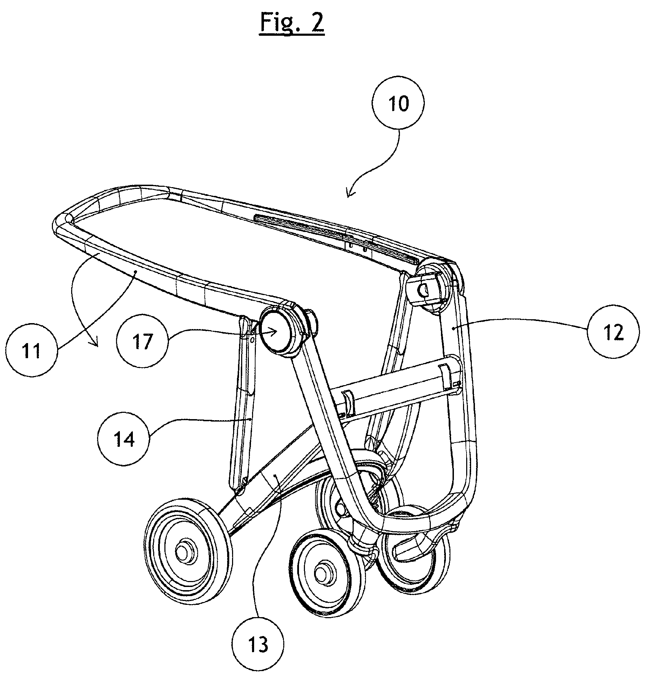

Die Figuren 2 und 3 zeigen den Buggy 10 beim Zusammenklappen in die flache Transportposition in verschiedenen Stadien. Ausgehend von der ausgeklappten Gebrauchsposition gemäß Figur 1 wird der Buggy 10 nach Lösen der beiden Gelenke 17, 18 zusammengeklappt, indem der obere Abschnitt 11 des Schieberahmens um die in Querrichtung durch die Gelenke 17, 18 gehende Achse 21 nach hinten und unten geschwenkt wird, so dass er sich in Richtung auf die Hinterräder 15 bewegt. Gleichzeitig bewegt sich bei diesem Zusammenklappen der untere Abschnitt 12 des Schieberahmens auf den Hinterrahmen 13 zu, wobei sich die Vorderräder 16 auf die Hinterräder 15 zu bewegen, denn der untere Abschnitt 12 schenkt um die in Querrichtung verlaufende Achse 22. Dabei befindet sich an dem unteren Abschnitt 12 des Schieberahmens eine in Querrichtung verlaufende Gelenkhülse 124, durch die sich diese Gelenkachse 22 erstreckt, wobei diese Gelenkhülse 124 schwenkbar eine obere horizontale Querstrebe 131 des Hinterrahmens 13 aufnimmt. In der vollständig zusammengeklappten Stellung gemäß Figur 3 liegt dann der Buggy vollkommen flach, der obere Abschnitt 11 des Schieberahmens liegt auf dem Hinterrahmen 13 mit den Hinterrädern 15 und der Hinterrahmen liegt wiederum auf dem unteren Abschnitt 12 des Schieberahmens mit den Vorderrädern 16. Der obere Abschnitt 11 des Schieberahmens schwenkt somit aus der aufgeklappten Position gemäß Figur 1 um etwa 180 ° bis in die vollständig zusammengeklappte Position gemäß Figur 3.

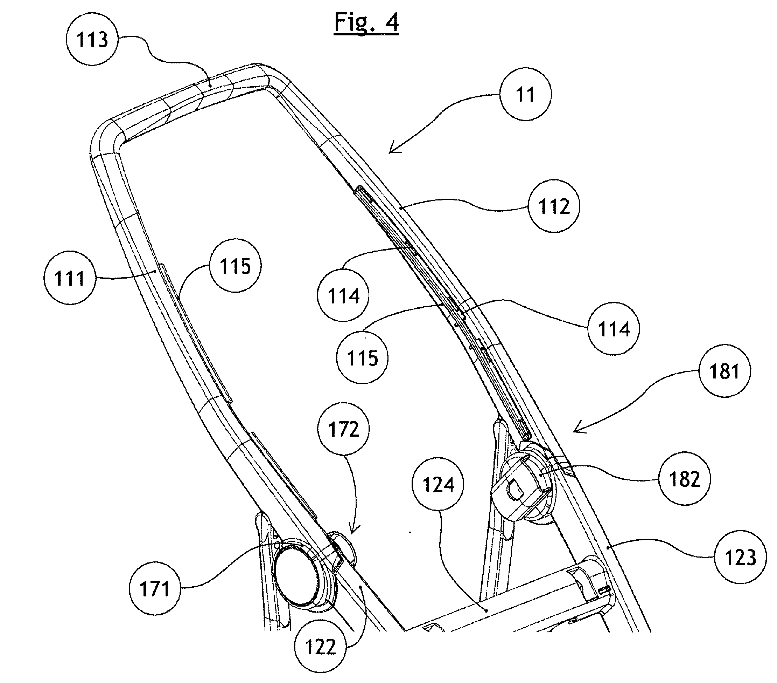

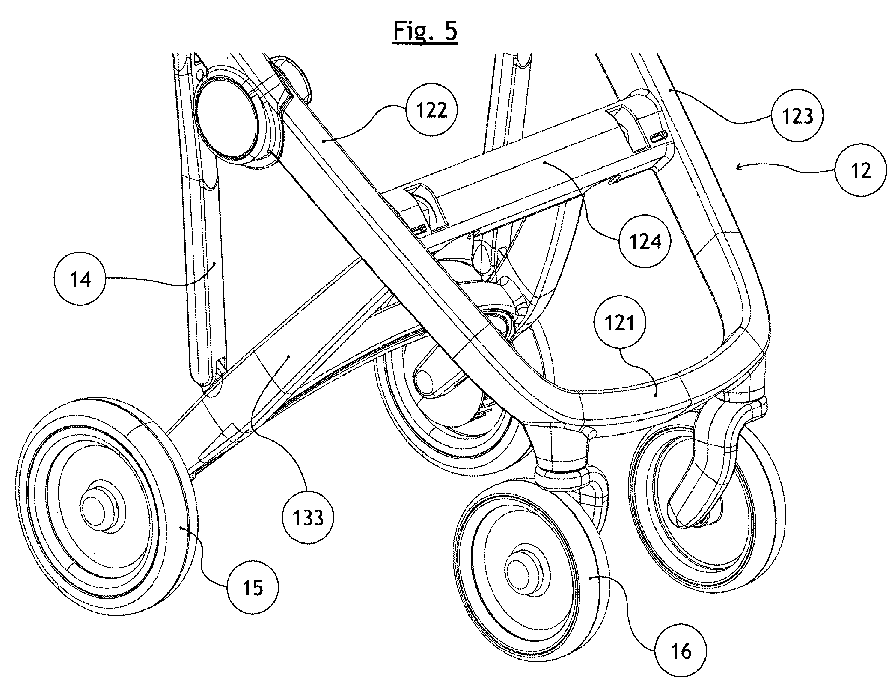

Figur 4, auf die nachfolgend Bezug genommen wird, zeigt eine vergrößerte Ansicht des oberen Abschnitts 11 des Schieberahmens. Der obere Abschnitt 11 des Schieberahmens hat einen im Wesentlichen U-förmigen Grundriss, wobei die U-Form nach unten hin offen ist. Die beiden U-Schenkel 111, 112 sind somit an der Oberseite durch den U-Steg 113, welcher in Querrichtung verläuft, miteinander verbunden. An den jeweiligen unteren Enden der beiden U-Schenkel 111, 112, die dem unteren Abschnitt 12 des Schieberahmens zugewandt sind, befinden sich jeweils außen angespritzt die beiden äußeren Gelenkhälften 171, 181, da dort der obere Abschnitt 11 des Schieberahmens über die beiden Gelenke 17, 18 mit dem unteren Abschnitt 12 des Schieberahmens gelenkig verbunden ist, wobei die Gelenkachse 21 in Querrichtung durch diese Gelenke verläuft. Mit der jeweils äußeren Gelenkhälfte 171, 181 befindet sich somit ein wesentliches Element, in diesem Fall ein ringförmiges Führungselement direkt an den Schenkeln des U-förmigen oberen Abschnitts 11 es Schieberahmens. Ein damit jeweils zusammenwirkendes Gelenkelement, nämlich die jeweils innere Gelenkhälfte 172, 182, befindet sich hingegen jeweils am oberen Ende der beiden U-Schenkel 122, 123 des ebenfalls U-förmigen unteren Abschnitts 12 des Schieberahmens, welcher in Figur 5 dargestellt ist. Die wesentlichen Teile der beiden Gelenke 17, 18 sind somit an den beiden U-förmigen Abschnitten 11 und 12 des Schieberahmens angespritzt. Für die Gelenkfunktion werden gegebenenfalls lediglich noch Gelenkinnenteile benötigt, die ebenfalls aus Kunststoff gefertigt werden können. Die Anzahl der für die Gelenke 17, 18 insgesamt benötigten Bauteile ist somit gegenüber herkömmlichen Gelenken dieser Art stark reduziert, wodurch sowohl die Fertigungs- als auch die Montagekosten gesenkt werden.

Wie man weiterhin aus Figur 4 erkennt, sind jeweils an den Innenseiten der beiden U-Schenkel 111, 112 der oberen Abschnitts 11 des Schieberahmens längliche Leisten 115 angeformt, in denen sich jeweils mehrere Ausnehmungen 114 befinden, an denen man den hier nicht dargestellten Sitz des Buggys befestigen kann. Zum Beispiel können hier entsprechende Befestigungselemente, die sich an dem in der Regel aus Textil bestehenden Sitz befinden, eingerastet werden oder dergleichen. Es entfallen damit zusätzliche metallische Befestigungselemente. Die Leisten 115 mit den Ausnehmungen werden in vorteilhafter Weise beim Spritzgießen des oberen Abschnitts 11 mit angespritzt.

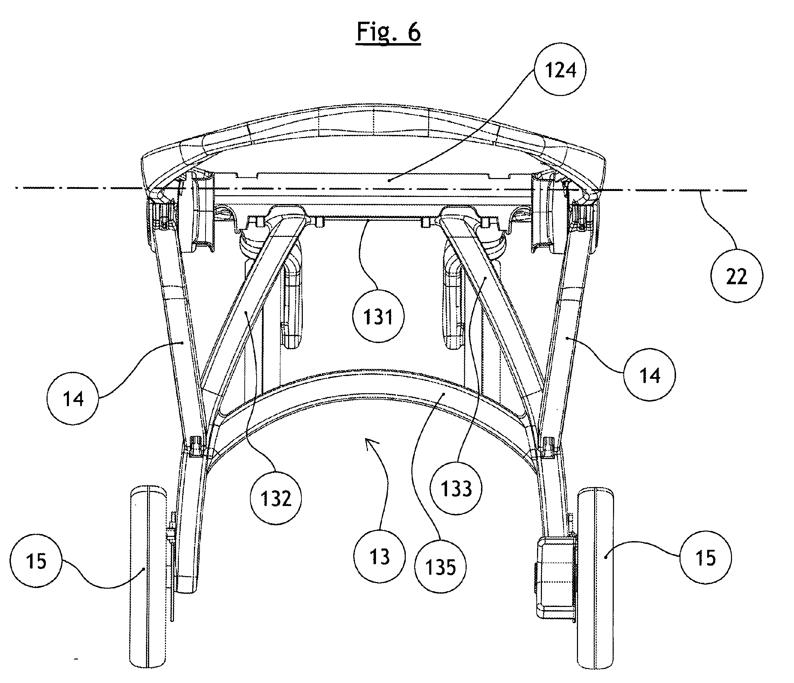

Der in Figur 5 dargestellte untere Abschnitt 12 des Schieberahmens bildet das zweite wesentliche tragende Rahmenbauteil des Buggys 10. Neben der nach oben hin offenen U-Form mit den beiden U-Schenkeln 122, 123 und dem diese unten verbindenden U-Steg 121 umfasst dieser untere Abschnitt 12 eine parallel mit Abstand weiter oberhalb zu dem U-Steg 121 in Querrichtung verlaufende die beiden U-Schenkel 122, 123 miteinander verbindende Gelenkhülse 124, die zur Unterseite hin teilweise offen ausgebildet ist. Die Rückseite und teilweise die Unterseite dieser Gelenkhülse 124 kann man auch in Figur 6 erkennen. Diese Gelenkhülse ist wiederum bevorzugt an dem unteren Abschnitt 12 des Schieberahmens angespritzt und somit ein starres Bauteil. Sie ist hohl und nimmt eine obere horizontale Querstrebe 131 des Hinterrahmens 13 drehbar in sich auf, so dass sich hier ein zweites Gelenk ergibt und Hinterrahmen 13 und unterer Abschnitt 12 des Schieberahmens dort um eine in Querrichtung verlaufende Achse 22 gelenkig miteinander verbunden sind. Figur 7 zeigt, dass die Querstrebe 131 an ihren jeweiligen Enden Abflachungen aufweist, durch die sich Schlüsselflächen 131 a ergeben. An der Gelenkhülse 124 sind jeweils in den beiden äußeren Endbereichen entsprechend dimensionierte Ausnehmungen 124 a gebildet, so dass man bei der herstellerseitigen Erstmontage nur in einer bestimmten Drehposition die Abflachungen 131 a der Querstrebe 131 in die Gelenkhülse 124 einführen kann. Sobald der Buggy vollständig montiert ist, lässt sich diese Drehposition, die man für ein wieder Lösen benötigen würde, nicht mehr erreichen. Dadurch wird verhindert, dass nach der Montage des Buggys ungewollt die gelenkige Verbindung zwischen der Gelenkhülse 124 und der Querstrebe 131 und somit zwischen dem unteren Abschnitt 12 des Schieberahmens und dem Hinterrahmen 13 gelöst werden kann.

Aus Figur 6 wird der Aufbau des Hinterrahmens 13 deutlich, welcher das dritte größere tragende Bauteil des Rahmens des Buggys 10 bildet. Dieser Hinterrahmen 13 hat im Grundriss eine von einem U abgeleitete Form, wobei die U-Schenkel von den beiden Stützbeinen 132, 133 gebildet sind, an deren unteren Enden jeweils die Hinterräder 15 angebracht sind. Die beiden Stützbeine 132, 133 laufen nach oben hin im leichten Bogen etwas aufeinander zu und sind an ihren jeweiligen oberen Enden in Querrichtung über die horizontale Querstrebe 131 miteinander verbunden, welche in der Gelenkhülse 124 des unteren Abschnitts 12 des Schieberahmens aufgenommen ist. Mit Abstand unterhalb der oberen Querstrebe 131, die quasi den U-Steg der U-Form bildet, ist eine zusätzliche etwas gebogene untere Querstrebe 135 vorhanden, die die beiden Stützbeine 132, 133 miteinander in Querrichtung verbindet und den Hinterrahmen 13 zusätzlich stabilisiert. Diese gebogene Querstrebe 135 verläuft etwas oberhalb der Hinterräder 15. Etwa in Höhe dieser gebogenen Querstrebe 135 ist an jedem Stützbein 132, 133 jeweils eine Stützstrebe 14 gelenkig angebracht, die die gelenkige Verbindung zwischen dem Hinterrahmen 13 und dem oberen Abschnitt 11 des Schieberahmens herstellt, wobei diese beiden Stützstreben 14 bei ausgeklapptem Buggy 10 in der Seitenansicht gesehen etwa in vertikaler Richtung verlaufen und in einem spitzen Winkel sowohl zu den Stützbeinen 132, 133 als auch zu den U-Schenkeln 111, 112 stehen. Mit dem oberen Abschnitt 11 des Schieberahmens, dem unteren Abschnitt 12 des Schieberahmens, dem Hinterrahmen 13 und den beiden Stützstreben 14, das heißt mit insgesamt nur fünf Bauteilen, ist bereits die gesamte Rahmenkonstruktion des Buggys umfasst einschließlich einer Reihe von Elementen, die weitere Funktionen erfüllen.

Ein solches Element ist die in der Detailansicht gemäß Figur 10 erkennbare Achse 134 für das eine Hinterrad 15, welches bei dieser Ansicht abgenommen wurde. Man sieht, dass diese Achse 134 an dem unteren Ende des Stützbeins 133 angespritzt ist und sich in der Ansicht von hinten auf den Hinterrahmen 13 gesehen von dem Stützbein 133 aus rechtswinklig nach außen erstreckt. Das an dem Stützbein 133 des Hinterrahmens 13 montierte Hinterrad 15 ist in Figur 5 gut erkennbar. Die Achse 134 eines der Hinterräder ist in Figur 10 in vergrößertem Maßstab dargestellt. Die Tatsache, dass sich nach dem Spritzgießen des Stützbeins 133 die Achse 134 bereits an diesem befindet, führt zu einer erheblichen Zeitersparnis bei der Montage des Hinterrads 15, welches dann nur noch aufgesteckt und fixiert werden muss. Bei der späteren Entsorgung des Buggys vereinfacht dies das Recycling, da nach dem Abnehmen des Hinterrads kein Demontieren und getrenntes Entsorgen mehr erforderlich ist wie bei bislang verwendeten metallischen Achsen.

Die Rückseite der in Figur 6 gezeigten gebogenen unteren Querstrebe 135 weist eine Führungsnut 136 auf, die man in Figur 7 a andeutungsweise erkennen kann und die dazu vorgesehen ist, einen Schieber 19 aufzunehmen, welcher entlang dieser Führungsnut 136 verschiebbar ist und welcher Teil des Bremsmechanismus für die Hinterräder ist. Dieser Schieber 19 ist in Figur 8 für sich separat dargestellt. Auch bei dem Schieber 19 handelt es sich bevorzugt um ein im Spritzguss hergestelltes Bauteil aus Kunststoff. Da der Schieber 19 ein vergleichsweise flaches Kunststoffteil ist, ist er ausreichend biegsam und lässt sich in die gebogene Führungsnut 136 einfügen und entlang dieser verschieben. An seinen beiden Enden weist der Schieber 19 jeweils Bremselemente 191 in Form von Zahnkrallen auf. Dabei ist der Schieber jedoch bezüglich der Enden asymmetrisch ausgebildet, denn an dem einen Ende ist die Zahnkralle 191 nach unten gerichtet und an dem anderen Ende des Schiebers ist die Zahnkralle nach oben gerichtet. An den Hinterrädern 15 (siehe Figur 9) befindet sich an der dem jeweiligen Stützbein 132, 133 zugewandten Innenseite ein konzentrisch zur Radlauffläche angeordneter doppelter Zahnkranz mit einem Innenzahnkranz 151 und einem Außenzahnkranz 152, wobei man den Außenzahnkranz 152 in Figur 9 erkennen kann. Wenn der Schieber 19 nun durch einen hier nicht näher erläuterten Mechanismus bei Betätigung der Bremse um ein gewisses Maß in seiner Nut verschoben wird, dann greift aufgrund der asymmetrischen Ausbildung der Enden an dem einen Hinterrad 15 die nach unten gerichtete Zahnkralle 191 in den Außenzahnkranz 152 ein, da der Schieber an diesem Ende nach unten gedrückt wird. Gleichzeitig greift an dem anderen Ende des Schiebers, welches beim Verschieben nach oben hin gezogen wird, die nach oben hin gerichtete Zahnkralle 191 in den Innenzahnkranz 151 des anderen Hinterrads 15 ein, so dass gleichzeitig beide Hinterräder gebremst werden. Auch der Schieber 19 mit den Zahnkrallen ist bevorzugt ein gespritztes Bauteil aus Kunststoff, ebenso wie die Zahnkränze an den Hinterrädern 15, so dass auch hier später ein einfaches Recycling möglich ist. Auch das gesamte Hinterrad mit der Lauffläche kann gegebenenfalls vollständig aus Kunststoff bestehen.

In den Figuren 11 a und 11 b ist eines der Gelenke 18, die den oberen Abschnitt 11 mit dem unteren Abschnitt 12 des Schieberahmens gelenkig verbinden, noch einmal in zwei verschiedenen Ansichten dargestellt. In Figur 11 a sieht man das Gelenk 18 schräg von der Außenseite her, in Figur 11 b schaut man auf das Gelenk etwa senkrecht zur Gelenkachse 21. In diesen Darstellungen kann man besser erkennen, dass die äußere Gelenkhälfte 181 an der U-Strebe 112 des oberen Abschnitts 11 angeformt ist, während die innere Gelenkhälfte 182 an der U-Strebe 123 des unteren Abschnitts 12 des Schieberahmens angeformt ist. Zwischen den beiden miteinander fluchtenden U-Streben 112, 123 verläuft im aufgeklappten Gebrauchszustand eine Trennlinie 23, die einen Versatz aufweist, die sowohl in Figur 11 a als auch in Figur 11 b kenntlich gemacht ist.

In Figur 12 ist noch einmal die Aufhängung eines der lenkbaren Vorderräder 16 im Detail dargestellt. An dem unteren Abschnitt 12 des Schieberahmens ist dazu im äußeren Bereich des U-Stegs 121 jeweils eine sich bei aufgerichtetem Buggy 10 nach unten hin erstreckende Hülse 125 angespritzt, die den oberen kürzeren Schenkel 201 einer Aufhängung 20 für das Vorderrad um eine etwa vertikale Achse drehbar aufnimmt. Diese Aufhängung 20 ist ein etwa umgekehrt L-förmiges Bauteil, dessen längerer nach unten hin gerichteter Schenkel 202 die sich von diesem aus im rechten Winkel horizontal nach außen erstreckende Radachse 203 für das Vorderrad 16 aufweist. Auch diese Aufhängung kann ein aus Kunststoff im Spritzguss hergestelltes Bauteil sein. Somit wird auch im Hinblick auf diese Aufhängung 20 das erfindungsgemäße Konzept eines einfachen Recyclings und einer raschen Montage aufgrund der erheblich reduzierten Anzahl der insgesamt verwendeten Bauteile eingehalten. Zu den oben genannten fünf wesentlichen tragenden Bauteilen kommen lediglich der Schieber 19 für den Bremsmechanismus und die beiden Aufhängungen 20 für die Vorderräder hinzu, so dass ohne die vier Räder nur insgesamt acht Bauteile aus Kunststoff vorhanden sind, die alle jeweils im Spritzguss hergestellt werden können. Um zu einer Gewichtsreduzierung zu kommen bei gleichzeitig stabilen und mechanisch belastbaren Rahmenbauteilen, können die Rahmenbauteile wie der obere Abschnitt 11 des Schieberahmens, der untere Abschnitt 12 des Schieberahmens und der Hinterrahmen 13 beispielsweise als innen hohle Streben mit ausreichender Wandstärke hergestellt werden. Dabei kann man insbesondere das Gasinnendruck-Spritzgießen zur Herstellung dieser Bauteile verwenden, wobei sich auch innen hohle Bauteile mit komplexen Anformungen herstellen lassen.

### Bezugszeichenliste

- 10: Buggy
- 11: oberer Abschnitt des Schieberahmens
- 111: U-Schenkel
- 112: U-Schenkel
- 113: U-Steg
- 114: Ausnehmungen für Sitzbefestigung
- 115: Leisten
- 12: unterer Abschnitt des Schieberahmens
- 121: U-Steg
- 122: U-Schenkel
- 123: U-Schenkel
- 124: Gelenkhülse
- 124: a Ausnehmungen
- 125: Hülsen
- 13: Hinterrahmen
- 131: horizontale Querstrebe
- 131a: Schlüsselflächen, Abflachungen
- 132: Stützbein
- 133: Stützbein
- 134: Achse für Hinterrad
- 135: gebogene Querstrebe
- 136: Führungsnut
- 14: Stützstreben
- 15: Hinterräder
- 151: Innenzahnkranz
- 152: Außenzahnkranz
- 16: Vorderräder
- 17: Gelenk
- 171: äußere Gelenkhälfte
- 172: innere Gelenkhälfte
- 18: Gelenk
- 181: äußere Gelenkhälfte
- 182: innere Gelenkhälfte
- 19: Schieber
- 191: Bremselemente am Schieber
- 20: Aufhängung für Vorderrad
- 201: kürzerer Schenkel des L
- 202: längerer Schenkel des L
- 203: Radachse des Vorderrads
- 21: Achse
- 22: Achse
- 23: Trennlinie

## Patentansprüche

1. Zusammenklappbarer Kinderwagen umfassend einen im aufgeklappten Zustand in einer geneigten Ebene verlaufenden Schieberahmen, der eine Teilung aufweist, in deren Bereich sich Gelenke (17, 18) befinden, so dass beim Zusammenklappen ein oberer Abschnitt (11) des Schieberahmens gegenüber einem unteren Abschnitt (12) des Schieberahmens um die etwa horizontale Achse dieser Gelenke (17, 18) schwenkbar ist, sowie weiterhin umfassend ein Untergestell mit Rädern, wobei im zusammengeklappten Zustand unterer Abschnitt und oberer Abschnitt des Schieberahmens sowie mindestens Teile des Untergestells nahezu parallel oder in einem flachen Winkel zueinander liegen und der zusammenklappbare Kinderwagen einen flachen kompakten Zustand einnimmt, wobei die beiden gegeneinander verschwenkbaren Abschnitte (11, 12) des Schieberahmens jeweils etwa die Form eines U-Bügels aufweisen,
wobei sich die Aufhängungen der Vorderräder (16) an dem unteren Abschnitt (12) des Schieberahmens befinden,
und sich die Aufhängungen für die Hinterräder (15) an einem Hinterrahmen (13) des Untergestells befinden, welcher eine horizontale Querstrebe (131) aufweist,
wobei an beiden Seiten des Untergestells jeweils Stützstreben (14) vorgesehen sind, die an ihrem unteren Ende jeweils gelenkig an dem Hinterrahmen (13) des Untergestells und an ihrem oberen Ende jeweils gelenkig an dem oberen Abschnitt (11) des Schieberahmens angebracht sind,
**dadurch gekennzeichnet, dass** sich eine in Querrichtung verlaufende Gelenkhülse (124) an dem unteren Abschnitt (12) des Schieberahmens befindet und die obere horizontale Querstrebe (131) des Hinterrahmens in dieser Gelenkhülse (124) um eine horizontale Achse (22) schwenkbar aufgenommen ist.

2. Zusammenklappbarer Kinderwagen nach Anspruch 1,
**dadurch gekennzeichnet, dass** der Hinterrahmen (13) des Untergestells an jeder Seite je ein Stützbein (132, 133) aufweist, an welchem jeweils im unteren Endbereich eine Achse für je ein Hinterrad (15) angeformt ist.

3. Zusammenklappbarer Kinderwagen nach einem der Ansprüche 1 oder 2,
**dadurch gekennzeichnet, dass** der Hinterrahmen (13) des Untergestells ein einstückig aus Kunststoff gespritztes Bauteil ist, umfassend zwei Stützbeine (132, 133) die 1 horizontale Querstrebe (131), die die beiden Stützbeine oben miteinander verbindet, eine an jedem Stützbein jeweils im unteren Endbereich angeformte Achse (134) für je ein Hinterrad (15) sowie gegebenenfalls eine weitere untere die beiden Stützbeine verbindende Querstrebe.

4. Zusammenklappbarer Kinderwagen nach einem der Ansprüche 1 bis 3,
**dadurch gekennzeichnet, dass** die Bremse für die Hinterräder einen entlang einer unteren Querstrebe (135) des Hinterrahmens (13) in einer Führung beweglichen Schieber (19) umfasst, der endseitig mit Bremselementen (191) versehen ist, wobei bei Verschieben des Schiebers in seiner Führung in einer Richtung die Bremselemente mit korrespondierenden Eingriffselementen (151) gleichzeitig an beiden Hinterrädern (15) in Eingriff gelangen.

5. Zusammenklappbarer Kinderwagen nach Anspruch 4,
**dadurch gekennzeichnet, dass** der Schieber (19) als Bremselemente (191) Zahnkrallen aufweist, die mit korrespondierenden Zahnkränzen (151, 152) an den Hinterrädern (15) in Eingriff gelangen, wobei bei einem Hinterrad der Eingriff mit einem Innenzahnkranz und bei dem anderen Hinterrad der Eingriff mit einem Außenzahnkranz erfolgt.

6. Zusammenklappbarer Kinderwagen nach Anspruch 4 oder 5, **dadurch gekennzeichnet, dass** der Schieber (19) mit den Bremselementen (191) ein einstückig aus Kunststoff gespritztes bogenförmiges Bauteil ist, für welches ein Kurvenschlitz in der Querstrebe (135) des Hinterrahmens (13) als Führung dient.

7. Zusammenklappbarer Kinderwagen nach einem der Ansprüche 1 bis 6,
**dadurch gekennzeichnet, dass** der untere Abschnitt (12) des Schieberahmens ein einstückig aus Kunststoff gespritztes Bauteil in Form einer nach oben hin offenen U-Strebe ist, umfassend jeweils Gelenkhälften (172, 182) der Gelenke (17, 18) für die gelenkige Verbindung mit dem oberen Abschnitt (11) des Schieberahmens jeweils im oberen Endbereich der beiden Schenkel (122, 123) der U-Strebe.

8. Zusammenklappbarer Kinderwagen nach Anspruch 7,
**dadurch gekennzeichnet, dass** im unteren Endbereich an dem unteren Abschnitt (12) des Schieberahmens weiterhin Hülsen (125) angespritzt sind, in denen die Aufhängungen der Vorderräder (16) um eine vertikale Achse drehbar und damit lenkbar angebracht sind.

9. Zusammenklappbarer Kinderwagen nach einem der Ansprüche 7 oder 8,
**dadurch gekennzeichnet, dass** der obere Abschnitt (11) des Schieberahmens ein einstückig aus Kunststoff gespritztes Bauteil in Form einer nach unten hin offenen U-Strebe ist, umfassend jeweils korrespondierende Gelenkhälften (171, 181) der Gelenke (17, 18) für die gelenkige Verbindung mit dem unteren Abschnitt (12) des Schieberahmens.

10. Zusammenklappbarer Kinderwagen nach Anspruch 9, **dadurch gekennzeichnet, dass** an Schenkeln (111, 112) der U-Strebe des oberen Abschnitts (11) des Schieberahmens weiterhin jeweils innenseitig Elemente (114) für eine Befestigung eines textilen Sitzes angespritzt sind.

11. Zusammenklappbarer Kinderwagen nach einem der Ansprüche 1 bis 10,
**dadurch gekennzeichnet, dass** dieser in seinen sämtlichen tragenden Bauteilen des Schieberahmens (11, 12) und des Untergestells (12, 13) sowie allen wesentlichen funktionellen Bauteilen ausschließlich aus gespritzten Bauteilen aus werkstoffhomogenen Kunststoffen besteht.

12. Zusammenklappbarer Kinderwagen nach Anspruch 11,
**dadurch gekennzeichnet, dass** Schieberahmen (11, 12) und Untergestell (12, 13) mit allen wesentlichen funktionellen Bauteilen aus insgesamt nur fünf miteinander verbindbaren gespritzten Bauteilen aus Kunststoff bestehen,
nämlich einem Bauteil, welches den oberen Abschnitt (11) des Schieberahmens umfasst,
einem Bauteil, welches den unteren Abschnitt (12) des Schieberahmens umfasst, einem Bauteil, welches den Hinterrahmen (13) umfasst,
sowie zwei Stützstreben (14), die an ihrem unteren Ende jeweils gelenkig an dem Hinterrahmen (13) des Untergestells und an ihrem oberen Ende jeweils gelenkig an dem oberen Abschnitt (11) des Schieberahmens angebracht sind.

13. Zusammenklappbarer Kinderwagen nach einem der Ansprüche 1 bis 12,
**dadurch gekennzeichnet, dass** die obere horizontale Querstrebe (131) des Hinterrahmens (13) Schlüsselflächen (131 a) aufweist, denen entsprechend dimensionierte Montageaufnahmen in der Gelenkhülse (124) an dem unteren Abschnitt (12) des Schieberahmens zugeordnet sind, so dass nach der Montage des zusammenklappbaren Kinderwagens (10) die Querstrebe (131) aus der Gelenkhülse (124), die diese Querstrebe um eine horizontale Achse (22) schwenkbar aufnimmt, nicht mehr herausnehmbar ist.

## Claims

1. A collapsible stroller comprising a sliding frame that runs in an inclined plane in the opened state and exhibits a division, in the area of which are located hinges (17, 18), so that, during the collapsing process, an upper section (11) of the sliding frame can pivot relative to a lower section (12) of the sliding frame around the roughly horizontal axis of these hinges (17, 18), and further comprising an underframe with wheels, wherein, in the collapsed state, the lower section and upper section of the sliding frame along with at least parts of the underframe lie nearly parallel or at a shallow angle to each other, and the collapsible stroller assumes a flat, compact state, wherein the two sections (11, 12) of the sliding frame that can be pivoted against each other each exhibit approximately the shape of a U-bracket,
wherein the suspensions for the front wheels (16) are located on the lower section (12) of the sliding frame,
and the suspensions for the rear wheels (15) are located on a rear frame (13) of the underframe, which exhibits a horizontal cross strut (131),
wherein respective supporting struts (14) are provided on both sides of the underframe, whose lower end is respectively hinged to the rear frame (13) of the underframe, and whose upper end is respectively hinged to the upper section (11) of the sliding frame,
**characterized in that** a hinge sleeve (124) running in the transverse direction is located on the lower section (12) of the sliding frame, and the upper horizontal cross strut (131) of the rear frame is accommodated in this hinge sleeve (124) so that it can pivot around a horizontal axis (22).

2. The collapsible stroller according to claim 1,
**characterized in that** the rear frame (13) of the underframe exhibits a supporting leg (132, 133) on each side, on which an axle for a respective rear wheel (15) is molded in the respective lower end region.

3. The collapsible stroller according to one of claims 1 or 2,
**characterized in that** the rear frame (13) of the underframe is a component injection molded as a single piece out of plastic, comprising two supporting legs (132, 133), the horizontal cross strut (131) that joins the two supporting legs together, an axle (134) molded onto each supporting leg in the respective lower end region for a respective rear wheel (15), as well as a potential additional lower cross strut that joins the two supporting legs together.

4. The collapsible stroller according to one of claims 1 to 3,
**characterized in that** the brake for the rear wheels encompasses a slider (19) that can move in a guide along a lower cross strut (135) of the rear frame (13), and is provided at its end with brake elements (191), wherein, while the slider shifts in its guide in one direction, the brake elements simultaneously engage both rear wheels (15) with corresponding engaging elements (151).

5. The collapsible stroller according to claim 4,
**characterized in that** the slider (19) exhibits toothed claws as braking elements (191) that engage corresponding toothed sprockets (151, 152) on the rear wheels (15), wherein engagement takes place with an inner sprocket for one rear wheel, and with an outer sprocket for the other rear wheel.

6. The collapsible stroller according to one of claims 4 or 5,
**characterized in that** the slider (19) with the braking elements (191) is a bow-shaped component injection molded out of plastic, for which a curved cut in the cross strut (135) of the rear frame (13) serves as a guide.

7. The collapsible stroller according to one of claims 1 to 6,
**characterized in that** the lower section (12) of the sliding frame is a component injection molded as a single piece out of plastic in the form of an upwardly open U-bracket, comprising respective hinge halves (172, 182) of the hinges (17, 18) for the hinged connection with the upper section (11) of the sliding frame in the respective upper end region of the two legs (122, 123) of the U-bracket.

8. The collapsible stroller according to claim 7,
**characterized in that** sleeves (125) are molded onto the lower section (12) of the sliding frame in the lower end region, in which the suspensions for the front wheels (16) are secured so that they can rotate around a vertical axis, and thus can be steered.

9. The collapsible stroller according to one of claims 7 or 8,
**characterized in that** the upper section (11) of the sliding frame is a component injection molded as a single piece out of plastic in the form of a downwardly open U-bracket, comprising respectively corresponding hinge halves (171, 181) of the hinges (17, 18) for the hinged connection with the lower section (12) of the sliding frame.

10. The collapsible stroller according to claim 9,
**characterized in that** respective inner elements (114) for attaching a textile seat are also injection molded onto legs (111, 112) of the U-bracket of the upper section (11) of the sliding frame.

11. The collapsible stroller according to one of claims 1 to 10,
**characterized in that** the latter consists exclusively of injection molded components made out of homogeneous plastic materials in all of its load-bearing components of the sliding frame (11, 12) and underframe (12, 13), as well as in all essential functional components.

12. The collapsible stroller according to claim 11,
**characterized in that** all essential functional components of the sliding frame (11, 12) and underframe (12, 13) consist of a total of only five components injection molded out of plastic that can be joined together,
specifically a component encompassing the upper section (11) of the sliding frame,
a component encompassing the lower section (12) of the sliding frame,
a component encompassing the rear frame (13),
along with two supporting struts (14), whose lower end is respectively hinged to the rear frame (13) of the underframe, and whose upper end is respectively hinged to the upper section (11) of the sliding frame.

13. The collapsible stroller according to one of claims 1 to 12,
**characterized in that** the upper horizontal cross strut (131) of the rear frame (13) exhibits key surfaces (131a), to which are allocated correspondingly dimensioned assembly receptacles in the hinge sleeve (124) on the lower section (12) of the sliding frame, so that once the collapsible stroller (10) has been assembled, the cross strut (131) can no longer be removed from the hinge sleeve (124) that accommodates this cross strut so that it can pivot around a horizontal axis (22).

## Revendications

1. Poussette pliable comprenant un châssis coulissant passant à l'état replié dans un plan incliné, qui comporte une séparation dans la zone de laquelle se trouvent des articulations (17, 18) de manière que lors du pliage une section supérieure (11) du cadre coulissant est pivotable par rapport à une section inférieure (12) du cadre coulissant autour de l'axe à peu près horizontal de ces articulations (17, 18), et comprenant également en outre un châssis inférieur avec des roues, la section inférieure et la section supérieure du cadre coulissant ainsi qu'au moins des parties du châssis inférieur se trouvant à l'état replié presque parallèles ou dans un angle plat l'une par rapport à l'autre et la poussette pliable adoptant un état compact plat, les deux sections (11, 12) basculables l'une contre l'autre du cadre coulissant présentant respectivement à peu près la forme d'un étrier en U,
les suspensions des roues avant (16) se trouvant sur la section inférieure (12) du cadre coulissant, et
les suspensions pour les roues arrière (15) se trouvant sur un cadre arrière (13) du châssis inférieur, lequel comporte une traverse horizontale (131),
des montants de support (14) étant respectivement prévus sur les deux côtés du châssis inférieur, qui sont montés respectivement sur leur extrémité inférieure de manière articulée sur le cadre arrière (13) du châssis inférieur et respectivement sur leur extrémité supérieure de manière articulée sur la section supérieure (11) du cadre coulissant, **caractérisée en ce qu'**un manchon articulé (124) passant dans le sens transversal se trouve sur la section inférieure (12) du cadre coulissant et la traverse supérieure horizontale (131) du cadre arrière est logé dans ce manchon articulé (124) pouvant pivoter autour d'un axe horizontal (22).

2. Poussette pliable selon la revendication 1,
**caractérisée en ce que** le cadre arrière (13) du châssis inférieur comporte respectivement de chaque côté une béquille (132, 133), sur laquelle un axe est formé respectivement dans la zone d'extrémité inférieure pour chaque roue arrière (15).

3. Poussette pliable selon l'une quelconque des revendications 1 ou 2,
**caractérisée en ce que** le cadre arrière (13) du châssis inférieur est un composant monobloc en plastique injecté, comprenant deux béquilles (132, 133), la traverse horizontale (131) qui relie les deux béquilles en haut entre elles, un axe (134) formé respectivement sur chaque béquille dans la zone d'extrémité inférieure pour chaque roue arrière (15) ainsi que le cas échéant une autre traverse inférieure reliant les deux béquilles.

4. Poussette pliable selon l'une quelconque des revendications 1 à 3,
**caractérisée en ce que** le frein pour les roues arrière comprend un coulisseau (19) mobile dans un guidage le long d'une traverse inférieure (135) du cadre arrière (13), qui est dotée en extrémité d'éléments de freinage (191), lors du déplacement du coulisseau dans son guidage dans une direction, les éléments de freinage venant en prise simultanément avec des éléments d'engagement correspondants (151) sur les deux roues arrière (15).

5. Poussette pliable selon la revendication 4,
**caractérisée en ce que** le coulisseau (19) comporte des griffes dentées en tant qu'éléments de freinage (191), qui viennent en prise avec des couronnes dentées correspondantes (151, 152) sur les roues arrière (15), l'engagement ayant lieu pour une roue arrière avec une couronne dentée intérieure et l'engagement intervenant pour l'autre roue arrière avec une couronne dentée extérieure.

6. Poussette pliable selon la revendication 4 ou 5,
**caractérisée en ce que** le coulisseau (19) avec les éléments de freinage (191) est un composant cintré monobloc en plastique injecté pour lequel une fente courbe dans la traverse (135) du cadre arrière (13) sert de guidage.

7. Poussette pliable selon l'une quelconque des revendications 1 à 6,
**caractérisée en ce que** la section inférieure (12) du cadre coulissant est un composant monobloc en plastique injecté sous la forme d'un montant en U ouvert vers le haut, comprenant respectivement des moitiés d'articulations (172, 182) des articulations (17, 18) pour la liaison articulée avec la section supérieure (11) du cadre coulissant respectivement dans la zone d'extrémité supérieure des deux branches (122, 123) du montant en U.

8. Poussette pliable selon la revendication 7, **caractérisée en ce que** dans la zone d'extrémité inférieure des manchons (125) sont en outre injectés sur la section inférieure (12) du cadre coulissant, dans lesquels les suspensions des roues avant (16) sont montées pouvant tourner autour d'un axe vertical et pouvant être de ce fait orientables.

9. Poussette pliable selon l'une quelconque des revendications 7 ou 8,
**caractérisée en ce que** la section supérieure (11) du cadre coulissant est un composant monobloc en plastique injecté en forme d'un montant en U ouvert vers le bas, comprenant respectivement des moitiés d'articulations correspondantes (171, 181) des articulations (17, 18) pour la liaison articulée avec la section inférieure (12) du cadre coulissant.

10. Poussette pliable selon la revendication 9,
**caractérisée en ce que** sur les branches (111, 112) du montant en U de la section supérieure (11) du cadre coulissant, des éléments (114) côté intérieur sont en outre respectivement injectés pour une fixation d'un siège textile.

11. Poussette pliable selon l'une quelconque des revendications 1 à 10,
**caractérisée en ce que** cette dernière est composée dans tous ses composants porteurs du cadre coulissant (11, 12) et du châssis inférieur (12, 13) ainsi que tous les composants fonctionnels essentiels, exclusivement de composants injectés en matières plastiques homogènes du point de vue matière.

12. Poussette pliable selon la revendication 11,
**caractérisée en ce que** les cadres coulissants (11, 12) et châssis inférieurs (12, 13) avec tous les composants fonctionnels essentiels, ne sont composés au total que de cinq composants injectés en plastique pouvant être reliés entre eux,
notamment un composant qui comprend la section supérieure (11) du cadre coulissant,
un composant, qui comprend la section inférieure (12) du cadre coulissant,
un composant, qui comprend le cadre arrière (13),
ainsi que deux montants de support (14), qui sont montés sur leur extrémité inférieur respectivement de manière articulée sur le cadre arrière (13) du châssis inférieur et sur leur extrémité supérieure respectivement de manière articulée sur la section supérieure (11) du cadre coulissant.

13. Poussette pliable selon l'une quelconque des revendications 1 à 12,
**caractérisée en ce que** la traverse horizontale supérieure (131) du cadre arrière (13) comporte des surfaces clés (131a), auxquelles sont attribués des logements de montage dans le manchon articulé (124), dimensionnés de façon adéquate, sur la section inférieure (12) du cadre coulissant de manière qu'après le montage de la poussette pliable (10), la traverse (131) ne peut plus ressortir du manchon articulé (124), qui loge cette traverse pouvant pivoter autour d'un axe horizontal (22).
